# EUROPEAN PATENT SPECIFICATION

(11) **EP 2 408 647 B1**
(45) Date of publication and mention of the grant of the patent: **02.10.2013**
(21) Application number: 10714668.0
(22) Date of filing: 22.03.2010
(51) Int. Cl.: B60R 9/02, B60P 1/00, B60R 3/00

(54) **A WORK PLATFORM ASSEMBLY FOR A VEHICLE HAVING A LOAD BED**
ARBEITSPLATTFORMANORDNUNG FÜR EIN FAHRZEUG MIT EINER LADEFLÄCHE
ENSEMBLE PLATE-FORME DE TRAVAIL POUR UN VEHICULE PRESENTANT UN LIT DE CHARGEMENT

(30) Priority: 20.03.2009 GB 0904835
(43) Date of publication of application: 25.01.2012
(73) Proprietor: Caddick, Carl, Durham DL1 3TT (GB); Cockerill, Robert William, Durham DH6 2YD (GB)
(72) Inventor: Caddick, Carl, Durham DL1 3TT (GB); Cockerill, Robert William, Durham DH6 2YD (GB)
(74) Representative: Lawal, Abdulmalik Adinoyi
(86) International application number: PCT/GB2010/050481
(87) International publication number: WO 2010/106380

(56) References cited:
- WO-A1-2005/115806
- WO-A1-2008/117065
- GB-A- 2 419 571
- GB-A- 2 465 255

## Description

The present invention relates to a work platform assembly, in particular, but not limited to, a work platform assembly for a vehicle having a load bed.

Vehicles such as flat back wagons and articulated trailers carry goods or material which in certain cases need manual handling to load on and off the vehicle. This necessitates operatives working on and around the load bed of the vehicle, said load bed often being significantly higher than ground level.

When manual loading and off loading is required, especially at height, the operatives need to be protected to prevent falls from the trailer or load bed.

In order to help prevent hazardous falls when working at height, it is known to employ a harness which is clipped onto an overhead wire line which itself is connected to a frame structure. However, connecting and disconnecting the harness to the wire line each time loading and unloading is required can be tedious and time consuming and a user may be inclined not to connect his harness to the wire line in order to speed up the loading and unloading process. Working without the harness can be hazardous to an operative as there is then nothing to prevent said operative falling from the working position.

It is also known in the art to provide a fixed walkway around the load bed of a vehicle such that a user may stand on the walkway out of the way of the goods as they are being loaded onto or unloaded from the vehicle. However, such systems increase the width of the vehicle thus making the vehicle wider than intended and therefore a potential hazard to other road users.

WO2008/117605 discloses a load bed for a vehicle, and in particular to a load bed adapted to carry elongate articles upon the public roads. The load bed could for example be the trailer of an articulated vehicle, or it could be part of a rigid truck, as desired. The load bed has a set of retaining posts along the longitudinal sides of the bed, and at least one platform is mounted upon the load bed and is movable between a stowed condition and an in use condition, the retaining posts being between the load bed and the platform in its in use condition.

There is, therefore, a need to provide a system which will protect an operative working at height on a vehicle load bed, while providing a safe working platform from which to work without affecting the width of the vehicle.

According to a first aspect of the invention, there is provided a work platform assembly for a vehicle having a load bed, the assembly comprising a platform mountable to a load bed, said platform being moveable between a stowed condition and an in use condition; a barrier arrangement attachable to the platform proximate an edge thereof and adapted to be upstanding and substantially perpendicular from the plane of the platform when the platform is in the in use condition; and means for facilitating the movement of the platform between the stowed condition and the in use condition.

The present invention thus provides a work platform assembly which does not require the use of cables or a harness thus reducing the likelihood of an operative not complying with the safety requirements.

In addition, as the platform is moveable from a stowed position and an in use position, it does not effect the width of the trailer or wagon when installed thereon. The platform can be put into its in use condition during the loading or unloading process providing a safe walkway for the operative which puts him out of the way of hazards without having to climb up and down the load bed each time.

In exemplary embodiments of the invention, the means for facilitating the movement of the platform comprises at least one elongate support structure associated with the platform, the at least one support structure being securable to a surface of a load bed in a position perpendicular to a longitudinal axis of the load bed.

By having at least one elongate support structure associated with the platform, the assembly can be arranged as a modular assembly wherein it can be fitted to the load bed when required and removed therefrom. This is particularly useful when loading wide or long loads which would otherwise be restricted by the components of assembly.

Preferably the at least one support structure is securable to a surface of the load bed transversely of a longitudinal axis of the load bed.

Preferably each platform is associated with a pair of elongate support structures.

Preferably the means for facilitating the movement of the platform further comprises at least one slide member associated with the at least one support structure, said slide member being slidably receivable within said support structure.

Optionally a pair of slide members may be associated with one support structure.

Preferably the or each support structure is securable to a surface of the load bed by means of bolts or clips.

Preferably the slide members support the platform in the in use position.

Preferably there are a plurality of support structures spaced apart from one another.

According to the invention the platform is adapted to both slide and pivot in order to move between the in use and stowed positions.

Preferably the platform comprises a fibre reinforced plastic material.

Preferably the fibre reinforced plastic material comprises fibreglass.

In exemplary embodiments of the invention the or each support structure comprises a beam having a square or rectangular cross-sectional profile.

In exemplary embodiments the support structure comprises box cut steel.

Preferably the beam comprises a cut out portion in a section thereof.

The cut out allows the platform to be stowed in the same plane as the at least one support structure.

In alternative exemplary embodiments of the invention the or each support structure comprises a beam having an I cross-sectional profile.

According to a second aspect of the invention, there is provided a work platform assembly for a vehicle having a load bed, the assembly comprising a platform mountable to a load bed, said platform being moveable between a stowed condition and an in use condition; a barrier arrangement attachable to the platform proximate an edge thereof and adapted to be upstanding and substantially perpendicular from the plane of the platform when the platform is in the in use condition; means for facilitating the movement of the platform between the stowed condition and the in use condition and one or more platform supports adapted to support the platform when in the in use condition.

Preferably the work platform assembly further comprises a plurality of storage elements adapted to receive the platform supports when the platform is in the stowed condition.

Preferably the barrier comprises two or more balusters.

Preferably the balusters are in the form of a telescopic pole arrangement.

Preferably the barrier further comprises a railing connectable to two or more balusters.

Optionally the railing is in the form of a bar.

Optionally the railing is in the form of a wire line.

Optionally the barrier arrangement comprises a safety curtain arrangement.

The safety curtain may be arranged as a roll.

According to a third aspect of the invention there is provided a combined load bed and work platform assembly comprising a load bed having a longitudinal axis and two longitudinal sides and a work platform assembly according to the first or second aspects of the invention.

Preferably the combined load bed and work platform assembly comprises means for facilitating the movement of the platform which comprises one or more elongate support structures associated with the platform.

Preferably, the or each support structure is securable to a surface of a load bed in a position perpendicular to a longitudinal axis of the load bed.

Preferably the or each support structure extends substantially along a whole width of the load bed.

According to a fourth aspect of the invention, there is provided a vehicle comprising a load bed, the load bed being substantially flat and having a longitudinal axis and two longitudinal sides and a work platform assembly according to the first or second aspects of the invention.

Preferably the vehicle comprises means for facilitating the movement of the platform which comprises one or more elongate support structures associated with the platform.

Preferably the or each support structure is securable to a surface of a load bed in a position perpendicular to a longitudinal axis of the load bed.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

There now follows a description of preferred embodiments of the invention, by way of non-limiting example, with reference being made to the accompanying drawings, in which:
Figure 1 shows a first embodiment of a work platform assembly according to the invention attached to a load bed showing a platform in the stowed position and a platform in an in use condition;
Figure 2 shows an enlarged view of the platform in the stowed position of Figure 1;
Figure 3 shows an enlarged view of the platform in the in use position of Figure 1;
Figure 4 shows an exploded view of a baluster, sliding guide and support structure forming part of the first embodiment of the invention;
Figure 5 shows a second embodiment of a work platform assembly according to the invention attached to a load bed of a vehicle;
Figure 6 shows a partial view of the means for facilitating the movement of the platform in Figure 5;
Figure 7 show a cross-sectional view through the support structure of the embodiment of Figure 5;
Figure 8 shows a partial view of the means for facilitating the movement of the platform in the third embodiment of a work platform assembly according to the invention;
Figure 9 shows a plan view of a load bed of a vehicle having a work platform assembly according to a fourth embodiment of the invention attached thereto;
Figure 10 is a side view of the load bed of Figure 9;
Figure 11 is an end view of the load bed of Figure 9;
Figure 12 shows the steps of deployment of the platform and barrier forming part of the work platform assembly of Figure 9;

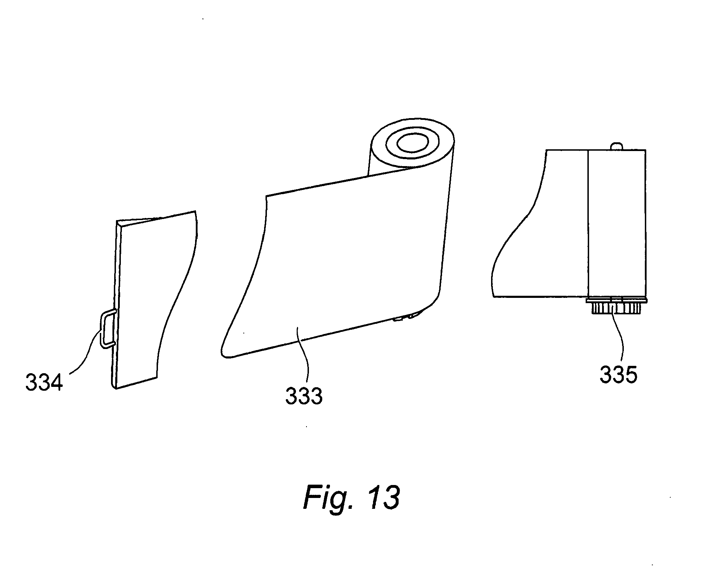

Figure 13 shows an embodiment of a roll of tarpaulin forming part of the forth embodiment of the invention;
Figure 14 shows a fifth embodiment of a work platform assembly according to the invention attached to a load bed of a vehicle;
Figure 15 shows a sixth embodiment of a work platform assembly according to the invention attached to a load bed of a vehicle;
Figure 16 shows the pivot pin arrangement linking the slide member and the balustrade in the embodiment of Figure 15;
Figure 17 shows a seventh embodiment of a work platform assembly according to the invention attached to a load bed of a vehicle.
Figure 18 shows a side view of the storage post arrangement of Figure 17; and
Figure 19 shows the storage of the wire lines of the in the storage post arrangement of Figure 18.

While the invention is susceptible to various modifications and alternative forms, specific embodiments thereof are shown by way of example in the drawings and will herein be described in detail. It should be understood that the drawings and detailed description thereof are not intended to limit the invention to the particular form disclosed, but on the contrary, the intention is to cover all modifications and alternatives falling within the scope of the invention as defined by the appended claims.

Further, although the invention will be described in terms of specific embodiments, it will be understood that various elements of the specific embodiments of the invention will be applicable to all embodiments disclosed herein.

In the drawings, the same features are denoted by the same reference signs throughout.

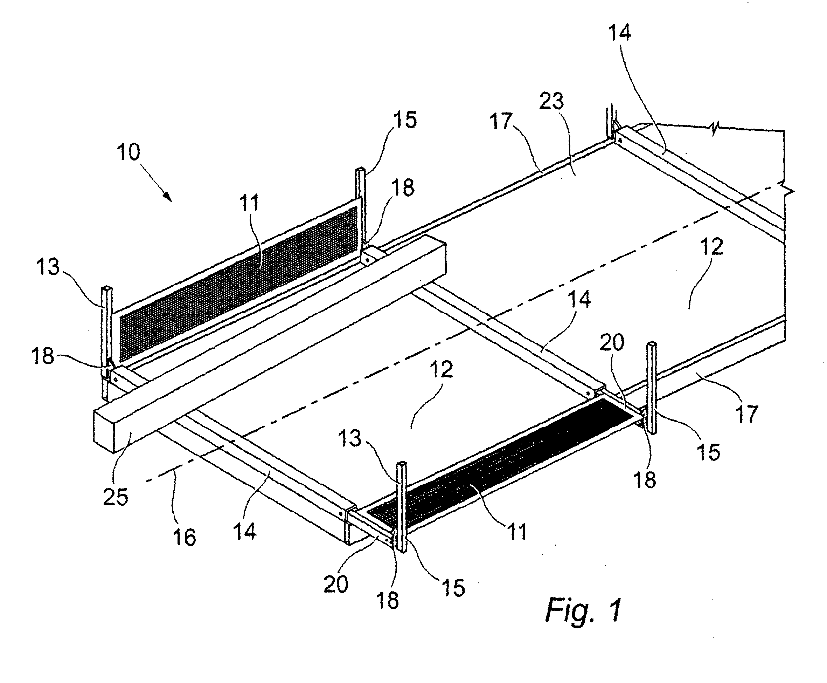

Referring to Figures 1 to 4, a first embodiment of a work platform assembly **10** for a vehicle (not shown) having a load bed or flat bed **12** according to the invention is shown.

The work platform assembly 10 is shown attached to the load bed 12 of a vehicle in Figures 1 to 3 which is substantially flat and has a longitudinal axis 16 and two longitudinal sides 17. The construction of the load bed 12 is known in the art and will therefore not be described in any further detail.

The work platform assembly 10 comprises one or more platforms **11** and a barrier arrangement **13** associated with each platform 11.

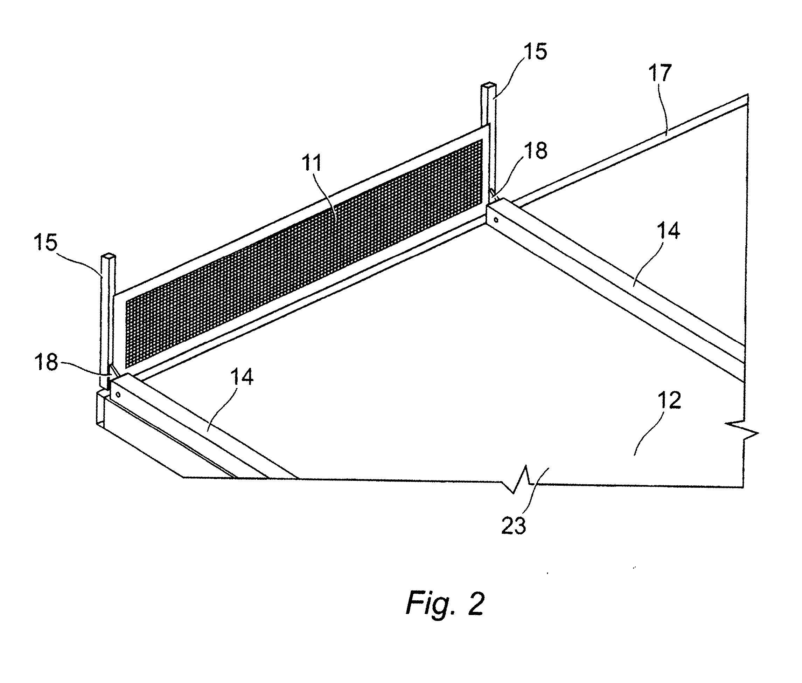

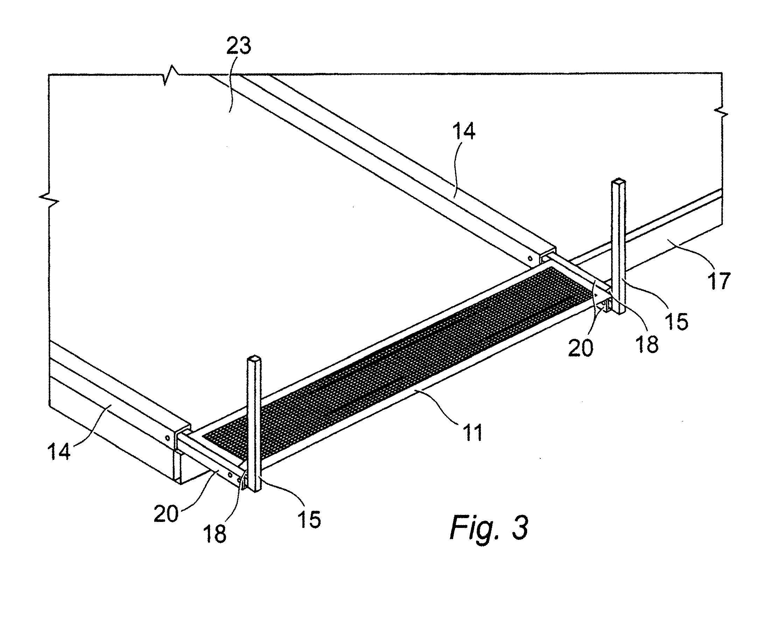

Each platform 11 is mountable to the load bed 12 for movement between a stowed condition (as best seen in Figure 2) and an in use condition (as best seen in Figure 3). In the embodiment shown, the platform 11 is first slid, then pivoted, to move between its stowed condition and its in use position.

To return to the stowed position the platform 11 is pivoted such that it is upright then slid back toward the load bed 12.

Each platform 11 is in the form of a grated floor plate and comprises a fibre reinforced plastic material. In preferred embodiments the fibre reinforced plastics material is a glass reinforced plastic material reinforced with fibreglass.

The barrier arrangement 13 is attachable to the associated platform 11 proximate an edge thereof, and is adapted to be upstanding and substantially perpendicular from the plane of the platform 11 when the platform 11 is in the in use condition. The barrier arrangement 13 comprises two or more balusters **15** and at least one railing (not shown) connecting the balusters 15. The retailing acting to prevent a fall from the platform 11. In the embodiment shown the barrier arrangement 13 comprises two balusters 15 and the railings connecting the balusters 15 have been omitted from figures 1 to 3 for clarity. The railings can be connected to the balusters 15 by any suitable means for example, they could be bolted, screwed or clipped to the balusters 15. Thus the railings can be a bolted/pinned system or a quick release system as in aluminium mobile scaffolding.

It could be envisage that the outer profile of the barrier arrangement 13 could be used for advertising materials

The work platform assembly 10 further comprises means for facilitating the movement of each platform 11 between a stowed condition and an in use condition.

In the shown embodiment the means for facilitating the movement of the platform 11 between the stowed condition and the in use condition comprises a pair of elongate support structures 14 associated with the platform 11. The support structures 14 are made of box profile steel and are adapted to be attached to a load receiving surface **23** of the load bed 12 in a position perpendicular to a longitudinal axis 16 of the load bed 12 as shown in Figures 1 to 4. The support structure 14 are positioned transversely across the load bed 12.

It could be envisage that the platform 11 comprises additional support structures 14.

In the embodiment shown, the support structures 14 are in the form of a hollow beam having a square cross-sectional profile which extends substantially across a whole width of the load bed 12 (as best seen in Figure 1).

Alternative appropriate cross-sections could be considered.

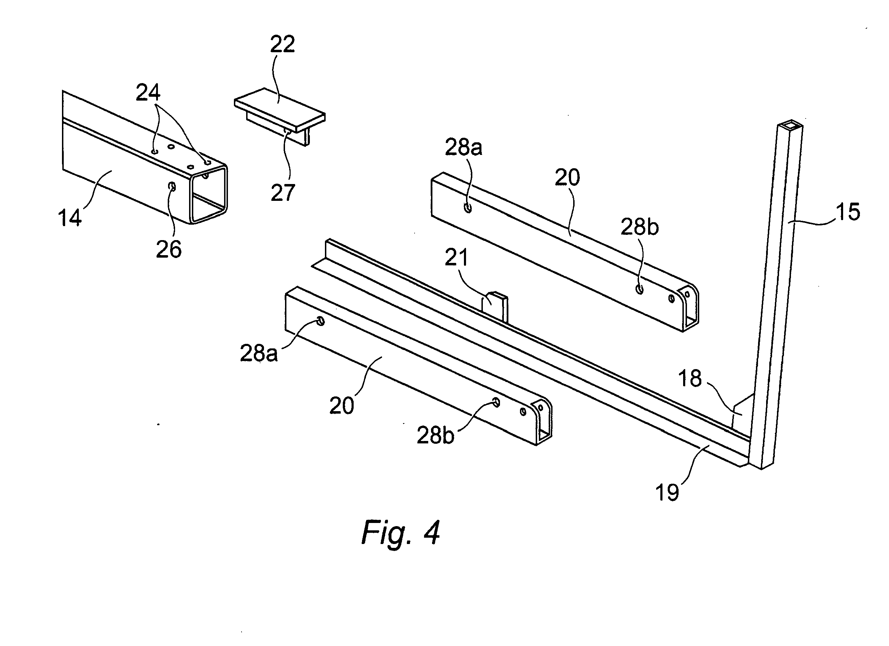

The means for facilitating the movement of the platform 11 further comprises a guide plate **19** and two slide members **20** associated with each support structure 14 as shown in figure 4. The guide plate 19 is an L-shaped plate and in use is sandwiched between the two slide members 20, which together are receivable within the support structure 14.

An end of the guide plate 19 is coupled to a baluster 15 and a first stop member **18** is coupled to the guide plate 19 proximate said end. A second stop member **21** is positioned along the guide plate 19 at a distance greater than the width of the platform 11 which extends out from the load bed 12 when in use.

A stop plate **22** is secured to the inside of the support structure 14 to control the in and out positions of the slide members 20. Movement of the slide members 20 will be halted when the first or second stop member 18, 21, depending on the direction of movement, abuts the stop plate 22.

The platform 11 is pivotably coupled between the adjacent first stop members 18 for movement between its in use condition and its stowed condition.

The assembly of the guide plate 19, slide members 20, first and second stop plates 18, 21 and stop plate 22 together will referred to as the slide assembly for ease of reference.

The attachment and use of a work platform assembly 10 according to the first embodiment of the invention on a vehicle having a trailer or wagon will now be described.

The work platform assembly 10 of the present invention is designed to be a modular assembly with a pair of support structures 14 defining a section of the work platform assembly 10.

A number of support structures 14 are first laid out along the length of the trailer or wagon of the vehicle such that each support structure 14 is positioned transversely of the longitudinal axis 16 of the load bed.

The work platform assembly may be permanently attached to the load bed 12 or temporality attached thereto by means of bolts or clips to the load bearing surface 23 of the load bed 12.

Generally the attachment to the load bearing surface will not need to be load bearing itself and is simply to stop movement of the support structures 14 when they are not held down by a load.

The spacing between adjacent support structures 14 will be approximately 0.5m to 2.55m depending on the size of the platforms associated with the support structures 14. In preferred embodiments, the majority of support structures are spaced approximately 2m apart from each other.

The slide assembly is then fitted inside each end of the support structures 14 and the stop plate 22 bolted into position between the first and second stop members 18, 21 by means of bolts or other suitable fasteners through bolt holes 24 in the support structures 14 (the corresponding bolt holes on the stop plate are not shown).

In the preferred embodiments, a non slip material such as timber or rubber is fitted as a permanent feature to the top of the support structures 14 in order to reduce the likelihood of a load placed on the support structures 14 slipping in transit.

The platforms 11 are then pivotably mounted between the first stop members 18 of adjacent slide assemblies. The platforms 11 should have a length corresponding to the spacing of the related adjacent support structures 14, and a width of between 0.5m and 0.7m. In preferred embodiments, the platforms 11 are approximately 0.6m in width. The platforms 11 are kept in their stowed position by means of a locking pin (not shown).

The slide assemblies are slid into a stowed (or transit) position wherein the guide plate 19 and the slide members 20 are substantially received in the support structures 14. The support structures 14 and stop plate 22 each have a corresponding pin hole **26, 27** for receiving a securing pin therethrough to hold the slide members 20 in position relative to the support structures 14. The slide members 20 each comprise a pin hole **28a, 28b** at either end thereof which are adapted to be aligned with the pin holes 26, 27 of the support structure 14 and stop plate 22. The slide members 20 are secured with a securing pin (not shown) which passes through the pin hole 28b proximate the barrier 13 to prevent it sliding out in transit.

When a user wants to use the work platform assembly, the securing pins are removed and the slide members 20 slid out. The platform 11 is then lowered down towards the load bed 12 and supported by the slide members 20 (as best seen in Figures 1 and 3).

The slide members 20 are secured with the securing pin (not shown) which passes through the pin hole 28a proximate the barrier 13 to prevent it retracting during loading.

The railings are then connected to the balusters 15.

The wagon or trailer is now ready for loading and an operator can safely walk along the platform. Load **25** is placed on the load bed 12 and across the support structures 14.

Once loading (or unloading) is completed, the railings are disconnected from the balusters 15 and stowed in a suitable place, for example in a box under the trailer.

The platforms 11 are then pivoted about the axis formed between two adjacent first stop members 18 such that the platform 11 is now perpendicular to the plane of the load bed 12. The upright platform is locked into position with a locking pin, and the slide members telescopically slid back in and locked into position with the securing pin.

With the platform 11 in the stowed position and the slide members 20 secured within the support structures 14, the load is now ready for delivery.

This embodiment has a particular advantage in that the platform 11 is not towed under the load bed in the stowed position.

At the off load point the work platform assembly is deployed as described above and the load off loaded.

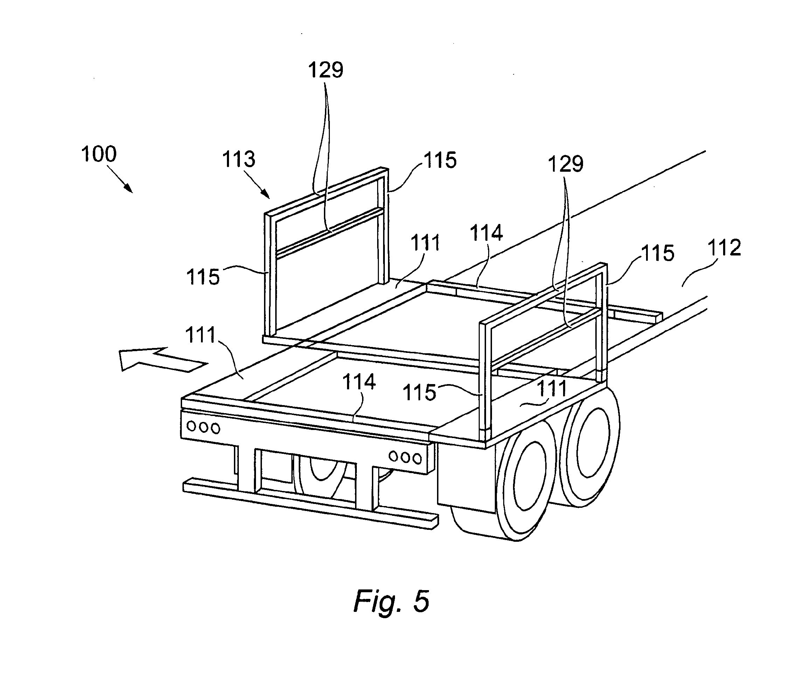

When required to be used for a load which is loaded by means of a forklift truck, said load being wider than the length of the platform 11, the work platform assembly components that will otherwise prevent the loading of the load can be removed and stowed in a box under the trailer or flat bed. Referring to Figures 5 to 7, a second embodiment **100** of a work platform assembly according to the invention is shown. Similar to the first embodiment, the work platform assembly 100 comprises one or more platforms **111** and a barrier arrangement **113** associated with each platform 111.

Each platform 111 is mountable to the load bed 12 for movement between a stowed condition and an in use condition, however in this embodiment, the platform 111 is adapted to slide between its in use condition and its stowed condition without the platform pivoting.

Each platform 111 is of a similar composition to that of the first embodiment.

The barrier arrangement 113 is attachable to the associated platform 111 proximate an edge thereof and is adapted to be upstanding and substantially perpendicular from the plane of the platform 111 when the platform 111 is in the in use condition. The barrier arrangement 113 comprises two or more balusters **115** and at least one railing 129 connecting the balusters 115. In the embodiment shown the barrier arrangement 113 comprises two balusters 115 and two railings 129 connecting the balusters 115.

The work platform assembly 110 further comprises means for facilitating the movement of each platform 111 between a stowed condition and an in use condition.

The means for facilitating the movement of the platform 111 between the stowed condition and the in use condition comprises a pair of elongate support structures 114 associated with the platform 111. The support structures 114 are made of box profile steel and are adapted to be attached to a load receiving surface of the load bed 12 in a position perpendicular to a longitudinal axis 16 of the load bed.
The support structure 14 are positioned transversely across the load bed 12.

It could be envisaged that the platform comprises additional support structures.

Like in the first embodiment, the support structures 114 are in the form of a hollow beam having a square cross-sectional profile and extend substantially along a whole width of the load bed.

Alternative appropriate cross-sections could be considered.

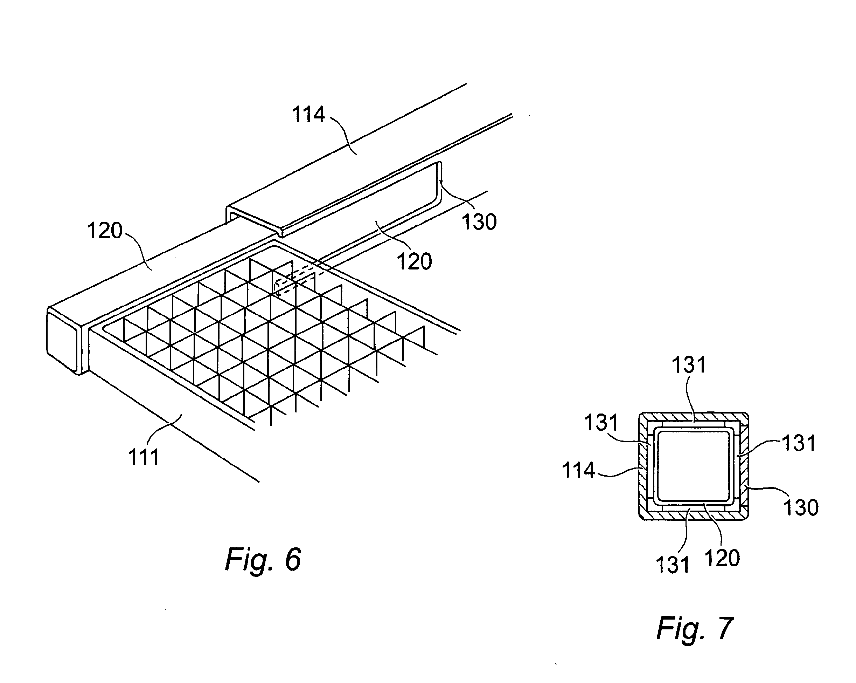

As shown in Figure 7. the means for facilitating the movement of the platform 11 further comprises a slide member **120** and a plurality of wear pads **131** associated with each support structure 114.

The slide member 120 is in the form of a hollow beam having a square cross-sectional profile which is receivable within the support structure 114. The plurality of wear pads 131 are positioned in between the slide member and the support structure as shown in Figure 7. These pads 131 also assist in providing a friction fit between the support structures 114 and the slide members 120.

The platform 111 is attached to an end of the slide member 120 and the support section 114 comprises a cut out portion **130** adapted to receive the platform therein. The cut out portion 130 is of a suitable dimension to allow the platform 111 not to extend beyond an end of the support section 114 when platform 111 is in its stowed position.

A stopper mechanism (not shown) may be employed to prevent unwanted removal of the slide member 120 from the support section 114. The stopper mechanism may be in the from of a protrusion extending from an inner surface of the support section 114 adapted to abut against a protrusion extending from an outer surface of the slide member 120.

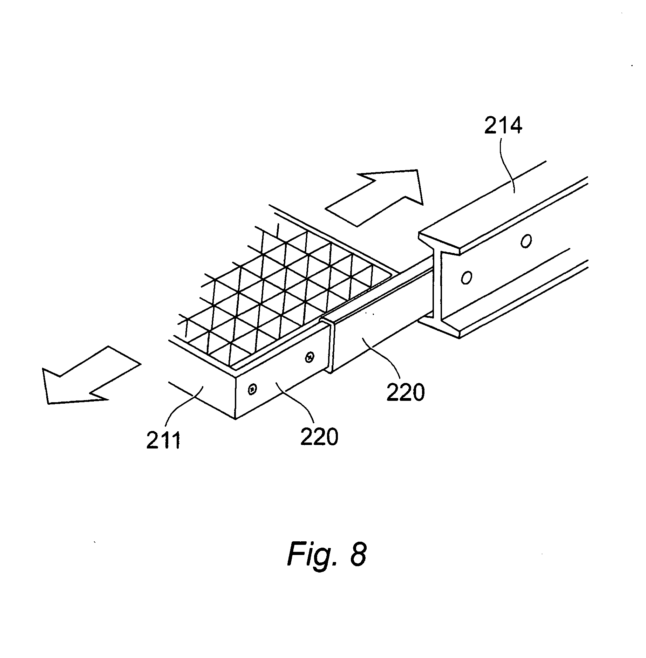

Referring to Figure 8, the means for facilitating the movement of the platform between a stowed condition and an in use condition in a third embodiment of the invention is shown.

The third embodiment of the invention has a number of features in common with that of the second embodiment and as such only the differences between the two embodiments will now be described.

Like in the previous embodiments, the means for facilitating the movement of the platform 211 between the stowed condition and the in use condition comprises a pair of elongate support structures 214 associated with the platform 211. The support structures 214 are made of steel and are adapted to be attached to a load receiving surface of the load bed 12 in a position perpendicular to a longitudinal axis of the load bed 12.

The support structure 14 are positioned transversely across the load bed 12.

It could be envisaged that the platform 211 comprises additional support structures.

The support structures 214 extend substantially along a whole width of the load bed, however, unlike in the previously described embodiment, the support structures 214 are in the form of a beam having an I cross-sectional profile.

The means for facilitating the movement of the platform 211 further comprises a slide member **220.** In the third embodiment of the invention, the slide member 220 is in the form of a telescopic slide arrangement. The platform 211 is attached to one of the slides of the telescopic slide arrangement.

As the support structure 214 has an I cross-sectional profile rather than a square cross-sectional profile, a cut out portion adapted to receive the platform 211 therein is not required.

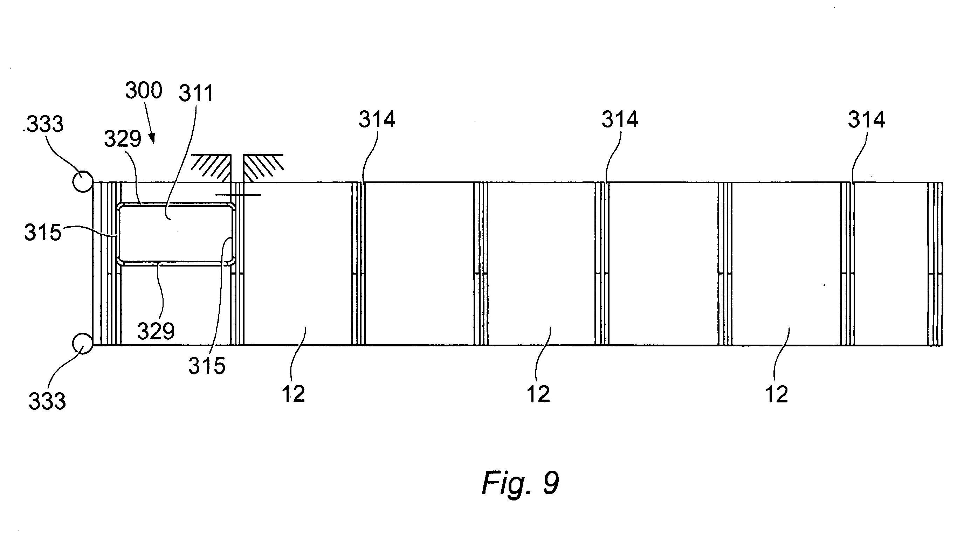

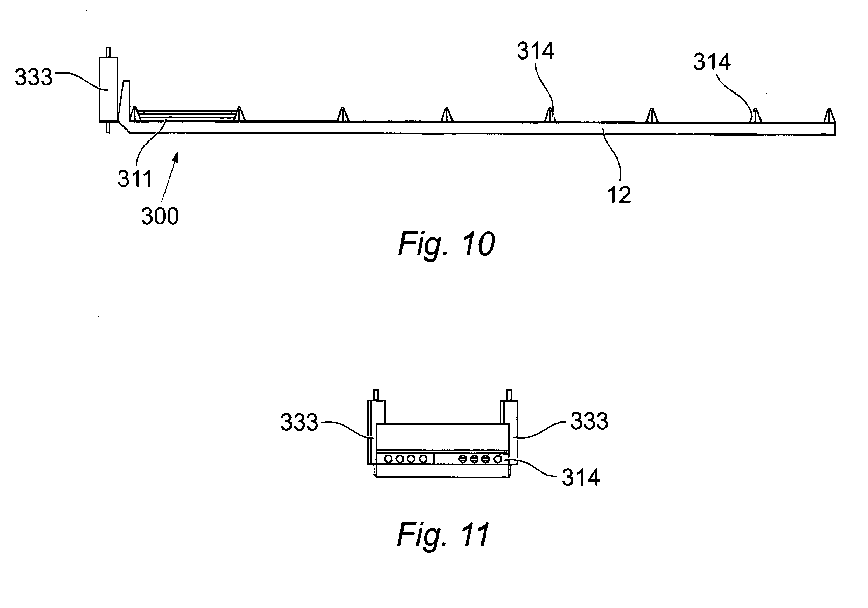

Referring to Figures 9 to 12, a fourth embodiment of a work platform assembly **300** according to the invention is shown. As in previous embodiments, the work platform assembly 300 comprises one or more platforms **311** and a barrier arrangement associated with each platform 311 (only one platform is shown in Figures 9 to 12 for clarity).

Each platform 311 is mountable to the load bed 12 for movement between a stowed condition and an in use condition, and is adapted to slide between its in use condition and its stowed condition.

Each platform 311 is of a similar composition to that of the previous embodiments and thus will not be discussed further.

The barrier arrangement is attachable to the associated platform 311 proximate an edge thereof and is adapted to be upstanding and substantially perpendicular from the plane of the platform 311 when the platform 311 is in the in use condition. The barrier arrangement comprises two balusters 315 and two railings 329 connecting the balusters 315.

It could be envisage that alternative railing options could be used.

In the fourth embodiment, the balusters 315 are pivotably attached to the platform 311 such that they can be moved between a lowered position wherein they are substantially parallel to the plane of the platform 311 and an upstanding position wherein the balusters 315 are substantially perpendicular from the plane of the platform 311.

The work platform assembly 300 further comprises means for facilitating the slide movement of each platform 311 between a stowed condition and an in use condition. The means for facilitating the slide movement of the barrier comprises a pair of elongate support structures 314 associated with the platform 111 and a slide member (not shown). The platform 311 is attached to an end of the slide member and the slide member maybe in the form of beam as in the second embodiment or a telescopic slide arrangement as in third embodiment.

The deployment of the work platform assembly 300 according to the fourth embodiment of the invention will now be described.

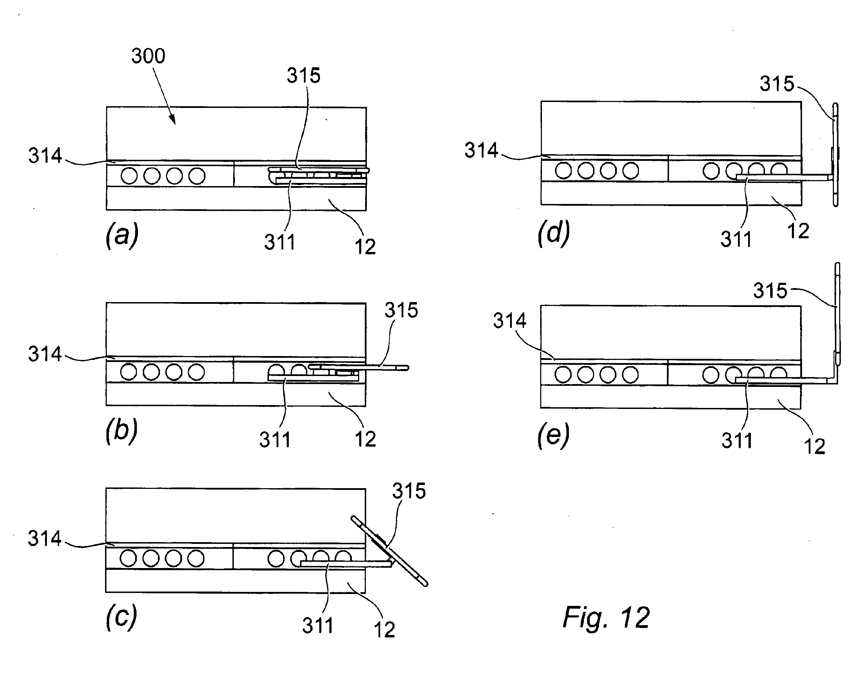

From the stowed position as shown in Figure 12a, when a user wants to deploy the work platform assembly 300, he first holds onto one of the railings 329 (shown in Figure 9) of the barrier arrangement and pulls it outwards away from the load bed 12 (Figure 12b).

As the barrier arrangement is pulled out, since the balusters 315 are connected to the platform 311, it will also slide the platform 311 out from its stowed position to its in use position (Figure 12c).

The user then pivots the balusters 315 from their lowered position to their upstanding position (Figure 12d). The barrier arrangement is then adjusted to the required height (Figure 12e).

When a user wants to put away the work platform assembly, he just repeats the steps above in the reverse order.

A sheet of tarpaulin may be deployed from a tarpaulin roll **333** attached to the load bed and used to cover a surface of the barrier arrangement. The tarpaulin roll 333 is deployed with the aid of a roller mechanism **335** known in the art and may comprise a handle **334** to facilitated the rolling out of the tarpaulin sheet.

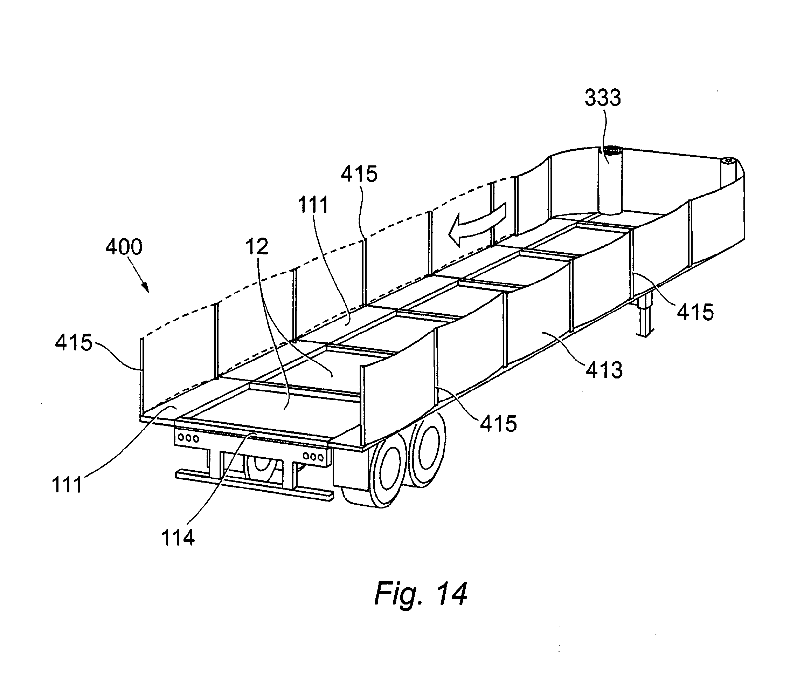

Referring to Figure 14, a fifth embodiment of a work platform assembly **400** according to the invention is shown.

The work platform assembly 400 differs from that of the previously described embodiments in the form of the barrier arrangement and the other features of the work platform assembly 400 may be the similar to those described in any of the earlier embodiments. In the embodiment shown in Figure 14 the other features of the work platform assembly 400, unless otherwise stated, similar to those of the second embodiment of the invention.

The barrier arrangement 413 is attachable to the associated platform 111 proximate an edge thereof and is adapted to be upstanding and substantially perpendicular from the plane of the platform 111 when the platform 111 is in the in use condition. The barrier arrangement 413 comprises two balusters **415.** Unlike in the previous embodiments, the barrier arrangement 413 does not comprise any railings connecting the balusters 415.

The barrier arrangement 413 further comprises a tarpaulin roll **333** attached to the load bed as described in reference to the fourth embodiment.

In use, after the platform is moved to its in use position, the roll of tarpaulin is pulled from the front of the trailer to the rear and is intertwined between adjacent balusters 415 to create a safety barrier as shown in Figure 14.

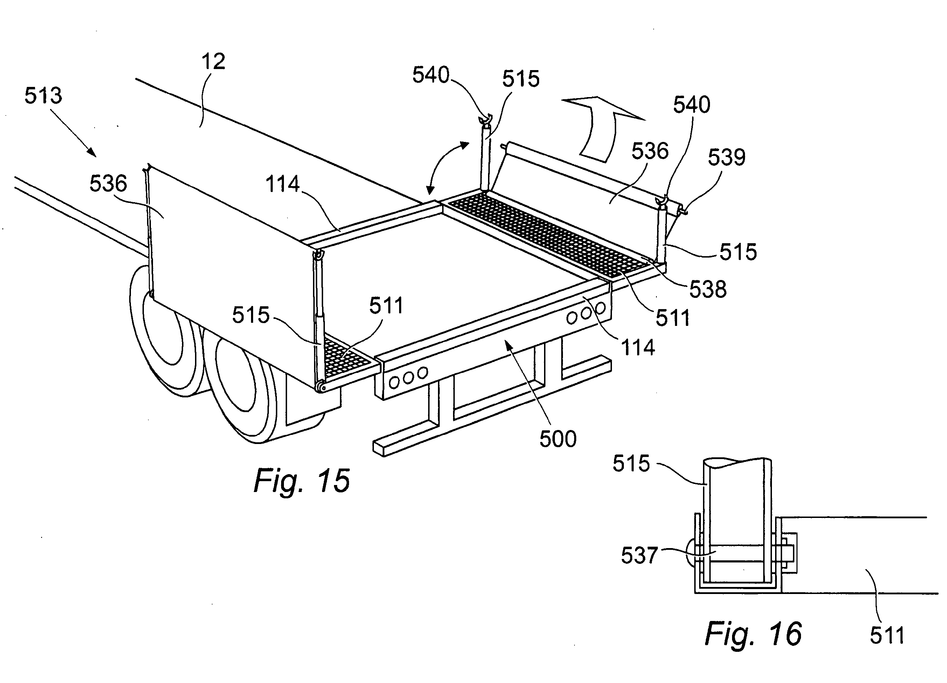

Referring to Figures 15 and 16, a sixth embodiment of embodiment of a work platform assembly **500** according to the invention is shown.

In a similar way to the fifth embodiment, the work platform assembly 500 differs from that of the previously described embodiments in the form of the barrier arrangement and the other features of the work platform assembly 500 may be the similar to those described in any of the earlier embodiments. In the embodiment shown Figure 16 the other features of the work platform assembly 500, unless otherwise stated, are similar to those of the second embodiment of the invention.

The barrier arrangement 513 is attachable to the associated platform 111 proximate an edge thereof and is adapted to be upstanding and substantially perpendicular from the plane of the platform 111 when the platform 111 is in the in use condition. The barrier arrangement 513 comprises two balusters 515. The balusters 515 are telescopic and adapted to extend between a height of 0.7m to 1.2m.

The barrier arrangement 513 further comprises a roll **538** of safety material attached to an end of the platform 511. The safety material is a fine mesh material and is adapted to create a safety barrier between adjacent balusters 515.

A pole **539** is connected to an end of the roll 538, the ends of which are receivable within hooks **540** at the free ends of the balusters 515.

The balusters 515 are pivotably connected to the slide member 520 by means of a pivot pin **537** such that the balusters can be folded flat for stowed use.

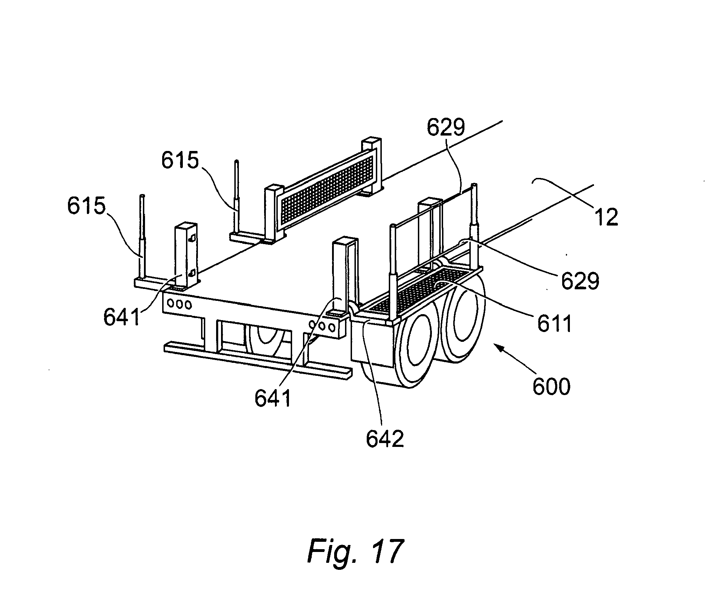

Referring to Figures 17 to 19, a seventh embodiment of a work platform assembly according to the invention is shown.

The work platform assembly 600 comprises one or more platforms **611** and a barrier arrangement associated with each platform 611.

Each platform 611 is mountable to the load bed 12 and is pivotable between a stowed condition and an in use condition.

Each platform 611 is of a similar composition to that of the previously described embodiments.

The work platform assembly further comprises a pair of platform supports **642** which support the platform when it is in its in use condition.

A storage post **641** is provided which adapted to receive and house the platform supports 642 when the platform is in the in stowed condition.

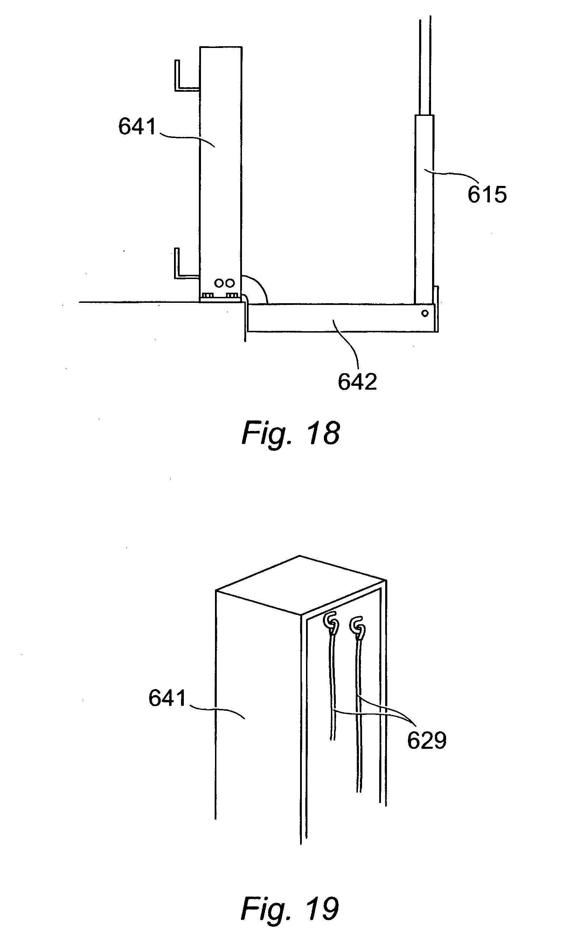

The barrier arrangement is attachable to the associated platform 611 proximate an edge thereof and is adapted to be upstanding and substantially perpendicular from the plane of the platform 611 when the platform 611 is in the in use condition. The barrier arrangement 113 comprises two telescopic balusters **615** and at least one railing 629 connecting the balusters 115. In the embodiment shown, the railings 629 are in the form of a wire line. When not in use, the wire lines may be detached from the balusters 615 and stored within the storage post as shown in Figure 19.

While the invention has been described with reference to a work platform assembly, it is envisaged the invention can bed utilised as a combined load bed and work platform assembly in accordance with the previously described embodiments. In such an arrangement, the work platform assembly could be permanently attached to the load bed.

The invention also relates to a vehicle comprising a load bed and a work platform assembly as previously described.

## Claims

1. A work platform assembly (10) for a vehicle having a load bed (12), the assembly (10) comprising a platform (11) mountable to a load bed (12), said platform (11) being moveable between a stowed condition and an in use condition; a barrier arrangement (13) attachable to the platform (11) proximate an edge thereof and adapted to be upstanding and substantially perpendicular from the plane of the platform (11) when the platform is in the in use condition; and means for facilitating the movement of the platform (11) between the stowed condition and the in use condition; **characterised in that** the platform (11) is adapted to both slide and pivot in order to move between the in use and stowed positions.

2. A work platform assembly (10) according to claim 1 wherein the means for facilitating the movement of the platform comprises at least one elongate support structure (14) associated with the platform (11), the support structure (14) being securable to a surface (23) of a load bed (12) in a position perpendicular to a longitudinal axis (16) of the load bed (12).

3. A work platform assembly (10) according to claim 2 wherein the at least one support structure (14) is securable to a surface (23) of the load bed (12) transversely of a longitudinal axis (16) of the load bed (12).

4. A work platform assembly (10) according to claim 2 or 3 wherein the means for facilitating the movement of the platform comprises a pair of support structures (14).

5. A work platform assembly (10) according to any one of claims 2 to 4 wherein the means for facilitating the movement of the platform further comprises at least one slide member (20) associated with the at least one support structure (14), said slide member (20) being slidably receivable within said support structure (14).

6. A work platform assembly (10) according to claim 5 wherein the at least one slide member (20) supports the platform (11) in the in use position.

7. A work platform assembly (10) according to any one of claims 2 to 6 wherein the or each support structure (14) is securable to a surface of the load bed (12) by means of bolts or clips.

8. A work platform assembly (10) according to any one of claims 2 to 7 comprising a plurality of support structures (14) spaced apart from one another.

9. A work platform assembly (10) according to any one of the preceding claims wherein the platform (11) comprises a fibre reinforced plastic material.

10. A work platform assembly (10) according to claim 9 wherein the fibre reinforced plastic material comprises fibreglass.

11. A work platform assembly (10) according to claim 2, or any claim dependent on claim 2, wherein the or each support structure (14) comprises a beam having a square or rectangular cross-sectional profile.

12. A work platform assembly (10) according to claim 11 wherein the support structure (14) comprises box cut steel.

13. A work platform assembly (10) according to claim 11 or 12 wherein the beam comprises a cut out portion in a section thereof.

14. A work platform assembly (10) according to claim 2, or any one of claims 3 to 10 when dependent on claim 2, wherein the or each support structure (14) comprises a beam having an I-cross-sectional profile.

15. A work platform assembly (10) according to claim 1 further comprising one or more platform supports (642) adapted to support the platform (11) when in the in use condition.

16. A work platform assembly (10) according to claim 15 further comprising a plurality of storage elements (641) adapted to receive the platform supports (642) when the platform (11) is in the stowed condition.

17. A work platform assembly (10) according to any one of the preceding claims wherein the barrier comprises two or more balusters (15).

18. A work platform assembly (10) according to claim 17 wherein the balusters (15) are each in the form of a telescopic pole arrangement.

19. A work platform assembly (10) according to claim 17 or 18 wherein the barrier further comprises a railing (329) connectable to two or more balusters (15).

20. A work platform assembly (10) according to claim 19 wherein the railing (329) is in the form of a bar.

21. A work platform assembly (10) according to claim 19 wherein the railing (329) is in the form of a wire line.

22. A work platform assembly (10) according to any one of claims 17 or 18 wherein barrier comprises a safety curtain arrangement.

23. A combined load bed and work platform assembly comprising a load bed (12) having a longitudinal axis (16) and two longitudinal sides (17) and a work platform assembly (10) according to any one of claims 1 to 22.

24. A combined load bed and work platform assembly as claimed in claim 23 wherein the support structure (14) extends substantially along a whole width of the load bed (12).

25. A vehicle comprising a load bed (12), the load bed (12) being substantially flat and having a longitudinal axis (16) and two longitudinal sides (17) and a work platform assembly (10) according to any one of claims 1 to 22.

## Patentansprüche

1. Eine Arbeitsplattformanordnung (10) für ein Fahrzeug mit einer Ladefläche (12), wobei die Anordnung (10) Folgendes beinhaltet: eine Plattform (11), die an einer Ladefläche (12) montiert werden kann, wobei die Plattform (11) zwischen einem verstauten Zustand und einem In-Verwendung-Zustand bewegt werden kann; eine Barriereeinrichtung (13), die an der Plattform (11), nahe einer Kante davon, angebracht werden kann und angepasst ist, um von der Ebene der Plattform (11), wenn sich die Plattform in dem In-Verwendung-Zustand befindet, hochzustehen und im Wesentlichen senkrecht dazu zu sein; und ein Mittel zum Erleichtern der Bewegung der Plattform (11) zwischen dem verstauten Zustand und dem In-Verwendung-Zustand; **dadurch gekennzeichnet, dass** die Plattform (11) angepasst ist, um sich sowohl zu verschieben als auch zu schwenken, um sich zwischen der In-Verwendung-Position und der verstauten Position zu bewegen.

2. Arbeitsplattformanordnung (10) gemäß Anspruch 1, wobei das Mittel zum Erleichtern der Bewegung der Plattform mindestens eine längliche Stützstruktur (14), die mit der Plattform (11) in Verbindung steht, beinhaltet, wobei die Stützstruktur (14) an einer Oberfläche (23) einer Ladefläche (12) in einer Position senkrecht zu einer Längsachse (16) der Ladefläche (12) gesichert werden kann.

3. Arbeitsplattformanordnung (10) gemäß Anspruch 2, wobei die mindestens eine Stützstruktur (14) an einer Oberfläche (23) der Ladefläche (12) quer zu einer Längsachse (16) der Ladefläche (12) gesichert werden kann.

4. Arbeitsplattformanordnung (10) gemäß Anspruch 2 oder 3, wobei das Mittel zum Erleichtern der Bewegung der Plattform ein Paar Stützstrukturen (14) beinhaltet.

5. Arbeitsplattformanordnung (10) gemäß einem der Ansprüche 2 bis 4, wobei das Mittel zum Erleichtern der Bewegung der Plattform ferner mindestens ein Verschiebeelement (20) beinhaltet, das mit der mindestens einen Stützstruktur (14) in Verbindung steht, wobei das Verschiebeelement (20) in der Stützstruktur (14) verschiebbar aufgenommen werden kann.

6. Arbeitsplattformanordnung (10) gemäß Anspruch 5, wobei das mindestens eine Verschiebeelement (20) die Plattform (11) in der In-Verwendung-Position stützt.

7. Arbeitsplattformanordnung (10) gemäß einem der Ansprüche 2 bis 6, wobei die oder jede Stützstruktur (14) mittels Bolzen oder Clips an einer Oberfläche der Ladefläche (12) gesichert werden kann.

8. Arbeitsplattformanordnung (10) gemäß einem der Ansprüche 2 bis 7, die eine Vielzahl von mit Abstand voneinander angeordneten Stützstrukturen (14) beinhaltet.

9. Arbeitsplattformanordnung (10) gemäß einem der vorhergehenden Ansprüche, wobei die Plattform (11) ein faserverstärktes Kunststoffmaterial beinhaltet.

10. Arbeitsplattformanordnung (10) gemäß Anspruch 9, wobei das faserverstärkte Kunststoffmaterial Glasfasern beinhaltet.

11. Arbeitsplattformanordnung (10) gemäß Anspruch 2 oder einem beliebigen von Anspruch 2 abhängigen Anspruch, wobei die oder jede Stützstruktur (14) einen Balken mit einem quadratischen oder rechteckigen Querschnittsprofil beinhaltet.

12. Arbeitsplattformanordnung (10) gemäß Anspruch 11, wobei die Stützstruktur (14) einen kastenförmig geschnittenen Stahl beinhaltet.

13. Arbeitsplattformanordnung (10) gemäß Anspruch 11 oder 12, wobei der Balken in einem Abschnitt davon einen Aussparungsteilabschnitt beinhaltet.

14. Arbeitsplattformanordnung (10) gemäß Anspruch 2 oder einem der Ansprüche 3 bis 10, wenn von Anspruch 2 abhängig, wobei die oder jede Stützstruktur (14) einen Balken mit einem I-Querschnittsprofil beinhaltet.

15. Arbeitsplattformanordnung (10) gemäß Anspruch 1, die ferner eine oder mehr Plattformstützen (642) beinhaltet, die angepasst ist/sind, um die Plattform (11) zu stützen, wenn sie sich in dem In-Verwendung-Zustand befindet.

16. Arbeitsplattformanordnung (10) gemäß Anspruch 15, die ferner eine Vielzahl von Lagerelementen (641) beinhaltet, die angepasst sind, um die Plattformstützen (642) aufzunehmen, wenn sich die Plattform (11) in dem verstauten Zustand befindet.

17. Arbeitsplattformanordnung (10) gemäß einem der vorhergehenden Ansprüche, wobei die Barriere zwei oder mehr Baluster (15) beinhaltet.

18. Arbeitsplattformanordnung (10) gemäß Anspruch 17, wobei jeder der Baluster (15) in der Form einer Teleskopstangeneinrichtung vorliegt.

19. Arbeitsplattformanordnung (10) gemäß Anspruch 17 oder 18, wobei die Barriere ferner ein Geländer (329) beinhaltet, das mit zwei oder mehr Baluster (15) verbunden werden kann.

20. Arbeitsplattformanordnung (10) gemäß Anspruch 19, wobei das Geländer (329) in der Form einer Stange vorliegt.

21. Arbeitsplattformanordnung (10) gemäß Anspruch 19, wobei das Geländer (329) in der Form einer Drahtschnur vorliegt.

22. Arbeitsplattformanordnung (10) gemäß einem der Ansprüche 17 oder 18, wobei die Barriere eine Sicherheitsvorhangeinrichtung beinhaltet.

23. Eine kombinierte Ladefläche- und Arbeitsplattformanordnung, die eine Ladefläche (12) mit einer Längsachse (16) und zwei Längsseiten (17) und eine Arbeitsplattformanordnung (10) gemäß einem der Ansprüche 1 bis 22 beinhaltet.

24. Kombinierte Ladefläche- und Arbeitsplattformanordnung gemäß Anspruch 23, wobei sich die Stützstruktur (14) im Wesentlichen entlang einer Gesamtbreite der Ladefläche (12) erstreckt.

25. Ein Fahrzeug, das Folgendes beinhaltet: eine Ladefläche (12), wobei die Ladefläche (12) im Wesentlichen flach ist und eine Längsachse (16) und zwei Längsseiten (17) aufweist, und eine Arbeitsplattformanordnung (10) gemäß einem der Ansprüche 1 bis 22.

## Revendications

1. Un ensemble plate-forme de travail (10) destiné à un véhicule présentant un lit de chargement (12), l'ensemble (10) comprenant une plate-forme (11) pouvant être montée sur un lit de chargement (12), ladite plate-forme (11) pouvant être déplacée entre un état escamoté et un état en utilisation ; un agencement en barrière (13) pouvant être attaché à la plate-forme (11) jouxte un bord de celle-ci et conçu pour être dressé et substantiellement perpendiculaire par rapport au plan de la plate-forme (11) lorsque la plate-forme est dans l'état en utilisation ; et un moyen destiné à faciliter le déplacement de la plate-forme (11) entre l'état escamoté et l'état en utilisation ; **caractérisé en ce que** la plate-forme (11) est conçue pour à la fois coulisser et pivoter afin de se déplacer entre les positions en utilisation et escamotée.

2. Un ensemble plate-forme de travail (10) selon la revendication 1 dans lequel le moyen destiné à faciliter le déplacement de la plate-forme comprend au moins une structure de support allongée (14) associée à la plate-forme (11), la structure de support (14) pouvant être assujettie à une surface (23) d'un lit de chargement (12) dans une position perpendiculaire à un axe longitudinal (16) du lit de chargement (12).

3. Un ensemble plate-forme de travail (10) selon la revendication 2 dans lequel cette au moins une structure de support (14) peut être assujettie à une surface (23) du lit de chargement (12) transversalement à un axe longitudinal (16) du lit de chargement (12).

4. Un ensemble plate-forme de travail (10) selon la revendication 2 ou la revendication 3 dans lequel le moyen destiné à faciliter le déplacement de la plate-forme comprend une paire de structures de support (14).

5. Un ensemble plate-forme de travail (10) selon une quelconque des revendications 2 à 4 dans lequel le moyen destiné à faciliter le déplacement de la plate-forme comprend en sus au moins un élément coulisse (20) associé à cette au moins une structure de support (14), ledit élément coulisse (20) pouvant être reçu par coulissement au sein de ladite structure de support (14).

6. Un ensemble plate-forme de travail (10) selon la revendication 5 dans lequel cet au moins un élément coulisse (20) soutient la plate-forme (11) dans la position en utilisation.

7. Un ensemble plate-forme de travail (10) selon une quelconque des revendications 2 à 6 dans lequel la ou chaque structure de support (14) peut être assujettie à une surface du lit de chargement (12) au moyen de boulons ou de clips.

8. Un ensemble plate-forme de travail (10) selon une quelconque des revendications 2 à 7 comprenant une pluralité de structures de support (14) espacées les unes des autres.

9. Un ensemble plate-forme de travail (10) selon une quelconque des revendications précédentes dans lequel la plate-forme (11) comprend un matériau en plastique renforcé de fibres.

10. Un ensemble plate-forme de travail (10) selon la revendication 9 dans lequel le matériau en plastique renforcé de fibres comprend de la fibre de verre.

11. Un ensemble plate-forme de travail (10) selon la revendication 2, ou n'importe quelle revendication dépendant de la revendication 2, dans lequel la ou chaque structure de support (14) comprend une poutre présentant un profil en coupe transversale carré ou rectangulaire.

12. Un ensemble plate-forme de travail (10) selon la revendication 11 dans lequel la structure de support (14) comprend de l'acier découpé en forme de boîte.

13. Un ensemble plate-forme de travail (10) selon la revendication 11 ou la revendication 12 dans lequel la poutre comprend une portion évidée dans une section de celle-ci.

14. Un ensemble plate-forme de travail (10) selon la revendication 2, ou une quelconque des revendications 3 à 10 lorsque dépendant de la revendication 2, dans lequel la ou chaque structure de support (14) comprend une poutre présentant un profil en coupe transversale en I.

15. Un ensemble plate-forme de travail (10) selon la revendication 1 comprenant en sus un ou plusieurs supports de plate-forme (642) conçus pour soutenir la plate-forme (11) lorsqu'elle est dans l'état en utilisation.

16. Un ensemble plate-forme de travail (10) selon la revendication 15 comprenant en sus une pluralité d'unités de rangement (641) conçues pour recevoir les supports de plate-forme (642) lorsque la plate-forme (11) est dans l'état escamoté.

17. Un ensemble plate-forme de travail (10) selon une quelconque des revendications précédentes dans lequel la barrière comprend deux balustres (15) ou plus.

18. Un ensemble plate-forme de travail (10) selon la revendication 17 dans lequel les balustres (15) sont chacun sous la forme d'un agencement en poteau télescopique.

19. Un ensemble plate-forme de travail (10) selon la revendication 17 ou la revendication 18 dans lequel la barrière comprend en sus une rampe (329) pouvant être raccordée à deux balustres (15) ou plus.

20. Un ensemble plate-forme de travail (10) selon la revendication 19 dans lequel la rampe (329) est sous la forme d'une barre.

21. Un ensemble plate-forme de travail (10) selon la revendication 19 dans lequel la rampe (329) est sous la forme d'un fil métallique.

22. Un ensemble plate-forme de travail (10) selon une quelconque des revendications 17 ou 18 dans lequel la barrière comprend un agencement en rideau de sécurité.

23. Un ensemble plate-forme de travail et lit de chargement combiné comprenant un lit de chargement (12) présentant un axe longitudinal (16) et deux côtés longitudinaux (17) et un ensemble plate-forme de travail (10) selon une quelconque des revendications 1 à 22.

24. Un ensemble plate-forme de travail et lit de chargement combiné tel que revendiqué dans la revendication 23 dans lequel la structure de support (14) s'étend substantiellement sur une largeur tout entière du lit de chargement (12).

25. Un véhicule comprenant un lit de chargement (12), le lit de chargement (12) étant substantiellement plat et présentant un axe longitudinal (16) et deux côtés longitudinaux (17) et un ensemble plate-forme de travail (10) selon une quelconque des revendications 1 à 22.
